# EUROPEAN PATENT APPLICATION

(11) **EP 0 672 725 A2**
(43) Date of publication of application: **20.09.1995**
(21) Application number: 95103771.2
(22) Date of filing: 15.03.1995
(51) Int. Cl.: C08L 83/04

(54) **Method for the fabrication of compositions using organopolysiloxane resin as a matrix**

(30) Priority: 16.03.1994 JP 45924/94
(71) Applicant: DOW CORNING ASIA, Ltd., Tokyo 105 (JP)
(72) Inventor: Eguchi, Katsuya, Dow Corning Asia, Ltd., Sumimoto, 1-15-1 Nishimbashi, Minato-ku, Tokyo 105 (JP); Kushibiki, Nobuo, Dow Corning Asia, Ltd., Sumimoto, 1-15-1 Nishimbashi, Minato-ku, Tokyo 105 (JP); Suzuki, Toshio, Dow Corning Asia, Ltd., Sumimoto, 1-15-1 Nishimbashi, Minato-ku, Tokyo 105 (JP)
(74) Representative: Spott, Gottfried, Dr.

(57) **Abstract**

A method for the fabrication of devices in which molecules exhibiting functional activities such as luminescence, optical modulation, photoelectric conversion, magnetism, and thermochromism, are stably dispersed in an easily molded and very strong matrix. Devices are fabricated by mixing an active molecule into a solventless, liquid resin whose main component is organopolysiloxane that is liquid at a temperature of 200°C or below, and in which the SiO₂ unit constitutes 20 to 70 mole%, and the RₙSiO_{(4-n)/2} unit constitutes 30 to 80 mole%, of the total constituent units wherein each R group is independently selected from monovalent organic groups, the hydrogen atom, and the hydroxyl group; at least 1 of R is a crosslinkable functional group; and n is 1, 2, or 3, and thereafter curing said resin to the solid state.

## Description

This invention introduces to novel devices containing active molecules dispersed in a matrix material formed from organopolysiloxane resin. The active molecules exhibit properties such as luminescence, optical modulation, photoelectric conversion, magnetism or thermochromism.

Many inorganic and organic molecules are known to exhibit an activity, such as luminescence, optical modulation, photoelectric conversion, recording functions, memory functions, magnetism and thermochromism. These molecules are seldom employed alone, but rather are frequently dispersed in some type of matrix. Both organic materials, as typified by plastics, and inorganic materials, as typified by glass, have been used as matrices for this purpose.

Several problems are associated with the use of plastics. Thus, the active molecule may be destroyed by the heat required for melting or curing, and a gradual precipitation from the plastic may occur due to inadequate solubility of the active molecule. For inorganic materials, the production of moldings is problematic, and in many cases processing cannot be carried out except at high temperatures which the active molecule cannot withstand. Moreover, inorganic materials are frequently brittle and do not have sufficient strength for application as a matrix for active molecules.

The use of porous glass produced by the sol-gel technique as a matrix for active molecules has recently been an area of research. In this technique, however, very long times are required to obtain moldings and cracking occurs quite easily. So this technique does not offer specific advantages over the use of either plastics or glass.

The use of an organic-modified sol-gel (known as ORMOSIL) as a matrix precursor material has been reported (Knobbe, et al., Ultrastructure Processing of Advanced Materials, Wiley, 1992, page 519). This process still requires the use of the matrix precursor material in solution form, and the resulting shrinkage due to solvent evaporation makes it very difficult to obtain moldings with a specific shape.

The object of the present invention is to overcome these problems through a method for fabrication of devices in which the active molecules are stably dispersed in an easily molded and very strong matrix.

In the present method, devices are fabricated by mixing an organic or inorganic molecule which exhibits a desired activity into a curable resin whose main component is organopolysiloxane that is liquid at a temperature of 200°C or below and in which the SiO₂ unit is from 20 to 70 mole% of the total constituent units, and the RₙSiO_{(4-n)/2} unit is from 30 to 80 mole% of said units, wherein each R group is independently selected from monovalent organic groups, the hydrogen atom, and the hydroxyl group; at least one R is a crosslinkable functional group; and n is 1, 2, or 3, and thereafter curing said resin in the solvent-free state.

The matrix precursor of this invention comprises organopolysiloxane whose essential components are 20 to 70 mole% of SiO₂ unit and 30 to 80 mole% of RₙSiO_{(4-n)/2} unit. This organopolysiloxane may contain other constituent units insofar as the object of the invention is not impaired. Other constituent units are not specifically restricted, are exemplified by TiO₂, ZrO₂, SnO₂, BO_{3/2}, and polyoxyalkylene.

Each R in the RₙSiO_{(4-n)/2} unit is independently selected from monovalent organic groups, the hydrogen atom, and the hydroxyl group. Monovalent organic groups are exemplified by alkyl groups such as methyl, ethyl, propyl, butyl, pentyl, and hexyl; aryl groups such as phenyl, tolyl, xylyl, and mesityl; alkenyl groups such as vinyl, allyl, propenyl, and butenyl; haloalkyl groups such as chloromethyl, and trifluoropropyl; alkoxy groups such as methoxy, ethoxy, propoxy, butoxy, and methoxyethoxy, etc. and acyloxy groups such as acetoxy, propionyloxy, and benzoyloxy. The monovalent organic group may also be an organofunctional group such as glycidoxypropyl, methacryloxypropyl, and mercaptopropyl. The monovalent organic group is preferably methyl, vinyl, or phenyl from the standpoint of economics, and methyl and vinyl are particularly preferred.

The subscript n, which specifies the number of R groups per silicon atom in the RₙSiO_{(4-n)/2} unit, has a value of 1, 2, or 3, but no specific restrictions attach to these values themselves. The organic character of the matrix precursor material becomes more pronounced as n increases, which results in a better affinity for organic molecules. In addition, larger values of n result in an increasingly soft cured, matrix material. As a result, the size of n must be determined in view of the desired mechanical properties. Nor is n required to assume the same value throughout the individual molecule, and RSiO_{3/2}, R₂SiO, and R₃SiO_{1/2} units may be present simultaneously in a single molecule. The subscript n preferably has a value near 3 based on considerations of the pre-cure viscosity, stability, and ease of dispersion of the active molecule. Finally, with regard to R₂SiO and R₃SiO_{1/2} units, the R groups within a single unit need not all be the same. For example, the R₂SiO unit may take the form of a methylvinylsiloxane unit.

The organopolysiloxane can be synthesized by methods well known in the art. It can be prepared by acid or alkali catalyzed cohydrolysis of tetraalkyl silicate and an alkoxysilane capable of providing the RₙSiO_{(4-n)/2} unit.

Even in the absence of solvent, the matrix precursor material of this invention must be liquid at a temperature of 200°C or less. This requirement exists to make possible facile dispersion of the active molecule and to support ease of molding. "Solventless, liquid" refers to a completely solvent-free condition or to a condition, in which solvent, if present, is present only in trace amounts. Thus, the scope of our invention does not include resins that do not become liquid unless solvent is added to them. The liquid-state temperature is restricted to 200°C and below, because molecules which exhibit the desired activities may readily decompose at higher temperatures. The matrix precursor material is preferably liquid at a temperature of 150°C or less, and more preferably at a temperature of 100°C or less. While the viscosity of the liquid is not critical, the viscosity preferably does not exceed 100,000 mPa·s for non-thixotropic fluids. For thixotropic fluids the viscosity preferably does not exceed 10,000 mPa·s at a shear rate of 1,000 sec⁻¹. The viscosity most preferably does not exceed 10,000 mPa·s at temperatures around room temperature.

Molecular structures that afford liquid at a temperature of 200°C or less cannot be specified in unconditional terms since they vary with the type and number of R groups. However, the liquid state is generally more easily obtained at higher values for the mole ratio of RₙSiO_{(4-n)/2} unit to SiO₂ unit, and this ratio preferably has values of 0.5 to 2.

Since the matrix precursor material used by our present invention must be cured after dispersion of the active molecule, at least one of the R groups must be a functional group capable of crosslinking. The nature of this crosslinkable functional group is not critical, but preferred examples are the hydrogen atom and groups such as hydroxyl, alkenyl, alkoxy, and acyloxy. Also preferred as the crosslinkable functional group are organic groups functionalized with alcoholic hydroxyl, epoxy, acrylic, methacrylic, and mercapto. Among the preceding, epoxy-functional organic groups are particularly preferred. A catalyst is used if necessary for crosslinking, and this catalyst should be selected based on the nature of the crosslinkable functional group. The type of catalyst is not critical insofar as the object of the present invention is not impaired. A catalyst will not be necessary when the functional group can crosslink in the absence of catalyst.

The matrix precursor can be cured using a variety of component combinations, i.e., through the use of only organopolysiloxane bearing self-polymerizing functional groups, by mixing organopolysiloxane bearing particular functional groups with organopolysiloxane carrying groups reactive with said functional groups, or by mixing organopolysiloxane bearing particular functional groups with a low-molecular-weight compound carrying groups reactive with said functional groups. For example, acrylic-functional organopolysiloxane, because it can be cured by heating or ultraviolet radiation, does not specifically require the addition of another resin. Alkenyl-functional organopolysiloxane can be cured by itself under the effect of radicals, but may also be cured by platinum catalysis after the addition of SiH-functional organopolysiloxane. Epoxy-functional organopolysiloxane can be cured through the addition of polyfunctional amine or acid anhydride.

The active molecule dispersed in a device fabricated according to our method may be selected without any restriction from organic and inorganic molecules that exhibit any physical, biological, or chemical activity. Said active molecule may be a high-molecular-weight or low-molecular-weight molecule and may have a crosslinked structure. The activities exhibited by such molecules are exemplified, by: nonlinear optical effects, luminescence, fluorescence, phosphorescence, optical modulation, photoelectric conversion, thermochromism, photochromism, electrochromism, photomechanical effects, mechanochemical effects, electromechanical effects, liquid crystallinity, magnetic field responsiveness, electric field responsiveness, conductivity, semiconductivity, hole burning activity, laser oscillation capability, recording, memorization, separation, and clathrate or cage formation.

It would be impractical to provide examples of molecules that exhibit each of these activities, but many compounds which are examples of molecules having light-related activities are provided in Koukinou Zairyou [Photofunctional Materials], Number 6 in the Koubunshi Kinou Zairyou Shiriizu [Functional Polymer Materials Series], edited by Koubunshi Gakkai [Society of Polymer Science, Japan].

Using the present invention, one is able to fabricate devices capable of containing, holding, and protecting a variety of active molecules through the use of a matrix precursor material that is easily molded, generates a stable matrix, and exhibits excellent dispersing properties with respect to molecules exhibiting desired activities. Devices fabricated according to the method of the invention can be used for optical recording media, magnetic recording media, dye lasers, and optical modulating elements.

### Examples

The invention is explained in greater detail below through working examples, in which Me indicates the methyl group and Vi indicates the vinyl group. The refractive index was measured using a precision refractometer from the Karunyuu Optical Company.

### Example 1

5 g organopolysiloxane (viscosity = 3,200 mPa·s at 25°C) with the compositional formula

(Me₃SiO_{1/2})_{0.6}(ViMe₂SiO_{1/2})_{0.6}(SiO₂)

and 4 g organopolysiloxane (viscosity = 75 mPa·s at 25°C) with the compositional formula

(Me₃SiO_{1/2})_{0.9}(HMe₂SiO_{1/2})_{0.9}(SiO₂)

were mixed. This was followed by the addition with thorough mixing of 1 mL of a 10⁻⁴ M acetone solution of Rhodamine B (laser oscillation-capable dye). The acetone was then removed under reduced pressure. Into the resulting mixture were thoroughly mixed 0.2 mg 2-methyl-3-butyn-2-ol as a cure-rate regulator and, as the curing catalyst, 50 micrograms as platinum metal of a toluene solution of tris(tetramethyldivinyldisiloxane)diplatinum(0). The mixture was degassed under reduced pressure, poured into a 0.5 x 10 x 30 mm mold, and heated for 3 hours at 50°C while pressed. The resulting cured sheet-form sample was a pink, transparent plastic material, which was proven to be optically homogeneous through measurements of the refractive index. This cured product was completely free of cracks and did not fracture even when dropped onto a concrete floor from a height of 1 meter.

### Comparative Example 1

Rhodamine B was mixed as in Example 1 with a precursor solution for sol-gel silica that had been prepared by mixing tetramethoxysilane and aqueous hydrochloric acid. The resulting mixture was poured into a Petri dish and cured by standing for 3 weeks. The resulting sample presented a very large number of cracks.

### Example 2

15 g organopolysiloxane (viscosity = 250 mPa·s at 25°C) with the compositional formula

(ViMe₂SiO_{1/2})_{1.8}(SiO₂)

and 12 g 1,1,3,3,5,5-hexamethyltrisiloxane were mixed. 1 g of the photochromic polydimethylsiloxane described in Makromol. Chem. Rapid Commun., 8, page 607 (1987) was then added with mixing. This is a polydimethylsiloxane whose main chain contains azobenzene residues. Curing catalyst was added to the resulting mixture by thoroughly mixing in sufficient isopropanolic chloroplatinic acid solution to provide 200 micrograms platinum metal. The mixture was then immediately poured into a glass test tube (inside diameter = 8 mm) to a height of 5 cm. The test tube was thereafter allowed to stand undisturbed at room temperature. The mixture was inspected after 48 hours, at which point it was found to be an orange solid that had assumed the shape of the test tube. This solid was proven to be optically homogeneous through measurement of the refractive index. The cured product was completely free of cracks and did not fracture even when dropped onto a concrete floor from a height of 1 m.

### Comparative Example 2

The azobenzene-containing polydimethylsiloxane described in Example 2 was mixed with an ORMOSIL precursor solution, the latter having been prepared by mixing equimolar amounts of 3-methacryloxypropyltrimethoxysilane and tetramethoxysilane, and then by adding aqueous hydrochloric acid. The resulting mixture was poured into a glass test tube. The solution in the test tube gelled after several hours, after which time its volume rapidly shrank. The shape of the test tube was not retained by the cured product.

### Example 3

1 g magnetic ferrite microparticles were mixed into 20 g organopolysiloxane (viscosity = 1,200 mPa·s at 25°C) with the compositional formula

(AMe₂SiO_{1/2})_{1.0}(SiO₂)

A = 3-glycidoxypropyl group.
To the resulting mixture was added 2.1 g triethylenetetramine as crosslinker with thorough stirring. The mixture was then poured into a 5 mm-deep container and held at 40°C for 12 hours. A sheet-form solid was obtained that exhibited magnetism and was completely free of cracks.

## Claims

1. A method for fabricating a device comprising
mixing an active molecule into a solventless, liquid resin and thereafter
curing the liquid resin to the solid state, where the liquid resin comprises an organopolysiloxane that is liquid at a temperature of 200°C or below and in which the SiO₂ unit constitutes from 20 mole percent to 70 mole percent of the total constituent units and the RₙSiO_{(4-n)/2} unit constitutes from 30 mole percent to 80 mole percent of the total constituent units wherein each R group is independently selected from monovalent organic groups, the hydrogen atom, and the hydroxyl group; at least one R is a crosslinkable functional group; and n is 1, 2, or 3.

2. The method according to claim 1, wherein the monovalent organic groups are selected from alkyl, aryl, alkenyl, haloalkyl, alkoxy, acyloxy, glycidoxypropyl, methacryloxypropyl, and mercaptopropyl groups and the croslinkable functional groups are selected from the hydrogen atom, alkenyl, alkoxy, acyloxy, glycidoxypropyl, methacryloxypropyl, and mercaptopropyl groups.

3. The method according to Claim 1 , wherein n is 3 and each R is independently selected from methyl, vinyl, hydrogen, and epoxy-functional organic groups, where at least one R is vinyl, hydrogen, or an epoxy-functional organic group.

4. The method according to claim 3, wherein the mole ratio of R₃SiO_{1/2} units to SiO₂ units is 0.5 to 2.
